(19) **Europäisches Patentamt / European Patent Office / Office européen des brevets**

(11) **EP 2 821 375 A1**

(12) **EUROPEAN PATENT APPLICATION**
published in accordance with Art. 153(4) EPC

(43) Date of publication:
07.01.2015 Bulletin 2015/02

(21) Application number: 13755581.9

(22) Date of filing: 26.02.2013

(51) Int Cl.:
$C03B\ 5/027^{(2006.01)}$        $C03B\ 5/235^{(2006.01)}$
$C03B\ 5/43^{(2006.01)}$          $C03C\ 3/087^{(2006.01)}$
$C03C\ 3/091^{(2006.01)}$        $C03C\ 3/093^{(2006.01)}$
$C04B\ 35/48^{(2006.01)}$

(86) International application number:
PCT/JP2013/054877

(87) International publication number:
WO 2013/129368 (06.09.2013 Gazette 2013/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.02.2012 JP 2012040125

(71) Applicant: Asahi Glass Company, Limited
Tokyo 100-8405 (JP)

(72) Inventors:
• TOKUNAGA, Hirofumi
Tokyo 100-8405 (JP)

• KOIKE, Akio
Tokyo 100-8405 (JP)
• NISHIZAWA, Manabu
Tokyo 100-8405 (JP)
• TSUJIMURA, Tomoyuki
Tokyo 100-8405 (JP)

(74) Representative: Müller-Boré & Partner
Patentanwälte PartG mbB
Friedenheimer Brücke 21
80639 München (DE)

(54) **PRODUCTION METHOD FOR NON-ALKALI GLASS**

(57) The present invention relates to a production method for a non-alkali glass, containing putting glass raw materials in a melting furnace, heating to a temperature of 1,350 to 1,750°C to prepare a molten glass, and forming the molten glass into a sheet shape by float method, in which the heating in the melting furnace concurrently utilizes heating by combustion flame of burners and electrical heating of the molten glass by heating electrodes arranged so as to be dipped in the molten glass in the melting furnace, and in which when electrical resistivity at 1,350°C of the molten glass is represented by Rg ($\Omega$cm) and electrical resistivity at 1,350°C of a refractory constituting the melting furnace is represented by Rb ($\Omega$cm), the glass raw materials and the refractory are selected so as to achieve Rb>Rg.

[FIG. 1]

EP 2 821 375 A1

**Description**

TECHNICAL FIELD

The present invention relates to a production method for a non-alkali glass suitable as a substrate glass for various displays and a substrate glass for a photomask.

Hereinafter, in the present description, the term "non-alkali" means that the content of alkali metal oxides (e.g., $Li_2O$, $Na_2O$ and $K_2O$) is 2,000 ppm or less.

BACKGROUND ART

Heretofore, a substrate glass for various displays, particularly one on which a metal or oxide thin film or the like is formed on the surface thereof has been required to have the following characteristics:

(1) extremely-low alkali metal oxide content, specifically the content of alkali metal oxide being 2,000 ppm or less, because if an alkali metal oxide is contained, alkali metal ions diffuse in a thin film and deteriorate film characteristics;
(2) high strain point, such that deformation of a glass and shrinkage (thermal shrinkage) due to structure stabilization of a glass can be minimally suppressed when a glass substrate is exposed to high temperature in a thin film formation step;
(3) having sufficient chemical durability to various chemicals used in semiconductor formation, particularly, having durability to buffered hydrofluoric acid (BHF: a mixed solution of hydrofluoric acid and ammonium fluoride) used for etching $SiO_x$ or $SiN_x$, liquid medicines containing hydrochloric acid used for etching ITO, various acids (nitric acid, sulfuric acid and the like) used for etching metal electrodes, and an alkali of resist-peeling solutions; and
(4) no defects (bubbles, striae, inclusions, pits, scratches and the like) inside and on the surface thereof.

In addition to the above requirements, the recent situations are as follows.

(5) Weight reduction of a display is required, and a glass itself is required to have small density.
(6) Weight reduction of a display is required, and thickness reduction of a substrate glass is required.
(7) In addition to the conventional amorphous silicon (a-Si) type liquid crystal display, a polycrystal silicon (p-Si) type liquid crystal display requiring slightly high heat treatment temperature has become to be produced (a-Si: about 350°C → p-Si: 350 to 550°C).
(8) To increase temperature-rising/lowering rates of heat treatment for producing a liquid crystal display to thereby increase productivity and enhance thermal shock resistance, a glass having small average coefficient of thermal expansion is required.

On the other hand, dry etching is increased, and the requirement to BHF resistance becomes to weaken. Many glasses conventionally used are glasses containing 6 to 10 mol% of $B_2O_3$ for the purpose of improving BHF resistance. However, $B_2O_3$ tends to decrease strain point. Examples of a non-alkali glass free of or containing small amount of $B_2O_3$ include the following ones.

Patent Document 1 discloses a $SiO_2$-$Al_2O_3$-SrO glass that does not contain $B_2O_3$. However, the temperature required for melting is high, and difficulty is encountered in the production.

Patent Document 2 discloses a $SiO_2$-$Al_2O_3$-SrO crystallized glass that does not contain $B_2O_3$. However, the temperature required for melting is high, and difficulty is encountered in the production.

Patent Document 3 discloses a glass containing 0 to 3 wt% of $B_2O_3$. However, an average coefficient of thermal expansion at 50 to 300°C exceeds $40 \times 10^{-7}$/°C.

Patent Document 4 discloses a glass containing 0 to 5 mol% of $B_2O_3$. However, an average coefficient of thermal expansion at 50 to 300°C exceeds $50 \times 10^{-7}$/°C.

Patent Document 5 discloses a glass containing 0 to 5 mol% of $B_2O_3$. However, thermal expansion is large and density is also high.

In order to solve the problems in the glasses described in Patent Documents 1 to 5, a non-alkali glass described in Patent Document 6 is proposed. The non-alkali glass described in Patent Document 6 has high strain point, can be formed by a float process, and is therefore considered to be suitable for use in a substrate for a display, a substrate for a photomask, and the like.

A non-alkali glass used in applications of a substrate for a display, a substrate for a photomask and the like, specifically a sheet glass having a non-alkali glass composition, can be obtained as follows. Raw materials of each component are prepared so as to have a target component, continuously put into a melting furnace and heated to a predetermined temperature to melt them. The molten glass is formed into a sheet shape having a predetermined thickness, annealed and cut.

In the case of a glass having high strain point, the raw materials are required to be heated to high temperature of from 1,350 to 1,750°C when melting them. As a heating means for melting raw materials, it is general to heat to a predetermined temperature by heating with combustion flame of burners arranged upper a melting furnace. However, in the case of heating to high temperature of from 1,350 to 1,750°C, there is a concern that a refractory constituting the melting furnace is eroded. If erosion of the refractory occurs, refractory components melt in a molten glass, leading to deterioration in quality of a glass produced, and this becomes a problem.

As described above, as a heating means for melting raw materials, it is general to heat to a predetermined temperature with combustion flame of burners arranged upper a melting furnace. As an additional heating means, there is a method for electrically heating a molten glass in a melting furnace by providing heating electrodes so as to be dipped in the molten glass in the melting furnace and applying direct current voltage or alternating current voltage to the heating electrode (see Patent Documents 7 and 8). The concurrent use of the heating by combustion flame of burners and the electrical heating of a molten glass is effective to suppress erosion of a refractory constituting a melting furnace. Erosion of a refractory constituting a melting furnace is particularly liable to occur near the interface between a molten glass and an upper space. For this reason, the concurrent use of the electrical heating that heats only a molten glass without increasing an atmosphere temperature of an upper space is effective to suppress erosion of a refractory.

PRIOR ART DOCUMENTS

PATENT DOCUMENTS

Patent Document 1:     JP-A-S62-113735
Patent Document 2:     JP-A-S62-100450
Patent Document 3:     JP-A-H4-325435
Patent Document 4:     JP-A-H5-232458
Patent Document 5:     US Patent 5,326,730
Patent Document 6:     JP-A-H10-45422
Patent Document 7:     JP-A-2005-132713
Patent Document 8:     JP-T-2009-523697

SUMMARY OF THE INVENTION

PROBLEMS THAT THE INVENTION IS TO SOLVE

A method for producing high quality p-Si TFT includes a solid phase crystallization method. However, further increase in strain point is required to carry out this method.

On the other hand, it is required to lower viscosity, particularly temperature $T_4$ at which glass viscosity reaches $10^4$ dPa·s is low, from the demand in glass production process, particularly melting and forming.

However, in the case of electrically heating a non-alkali glass, the following points should be noted.

Because the non-alkali glass has the content of an alkali metal oxide lower than that of an alkali glass such as soda lime glass, the amount of alkali metal ions present in a molten glass is small and thus, electric current is difficult to pass therethrough when electrically heating as compared with an alkali glass such as soda lime glass. For this reason, there is a concern that electric current passes into not only a molten glass but also into a refractory constituting a melting furnace, form a heating electrode provided in the melting furnace.

If electric current flows in a refractory constituting a melting furnace, all of the electric quantity applied cannot be used in the electrical heating of a molten glass, and this is not preferred from the standpoint of utilization efficiency of the electric quantity applied. In addition, if electric current flows in a refractory constituting a melting furnace, electric current flows also into a metal member (such as a metal frame) neighboring the melting furnace, and thus there is a risk of electrical shock. Furthermore, electrical heating occurs in a refractory, the temperature of the refractory is increased, and there is a concern of erosion of the refractory.

An object of the present invention is to provide a method suitable for producing non-alkali glass that solves the above-described disadvantages, has high strain point and low viscosity, particularly low temperature $T_4$ at which glass viscosity reaches $10^4$ dPa·s, and particularly is easily float-formed.

MEANS FOR SOLVING THE PROBLEMS

The present invention provides a production method for a non-alkali glass, containing mixing a glass raw material so as to have the following glass composition, putting it in a melting furnace, heating to a temperature of 1,350 to 1,750°C to prepare a molten glass, and forming the molten glass into a sheet shape,
in which the heating in the melting furnace concurrently utilizes heating by combustion flame of a burner and electrical heating of the molten glass by a heating electrode arranged so as to be dipped in the molten glass in the melting furnace, and
in which when electrical resistivity at 1,350°C of the molten glass is represented by Rg ($\Omega$cm) and electrical resistivity at 1,350°C of a refractory constituting the melting furnace is represented by Rb ($\Omega$cm), the glass raw material and the refractory are selected so as to achieve Rb>Rg:
in terms of mol% on the basis of oxides thereof:

| | |
|---|---|
| $SiO_2$ | 66 to 70, |
| $Al_2O_3$ | 12 to 15, |
| $B_2O_3$ | 0 to 1.5, |
| MgO | more than 9.5 and 13 or less, |
| CaO | 4 to 9, |
| SrO | 0.5 to 4.5, |
| BaO | 0 to 1, |
| $ZrO_2$ | 0 to 2; and |

containing an alkali metal oxide in an amount of 600 to 2,000 ppm,
in which MgO+CaO+SrO+BaO is 17 to 21,
MgO/( MgO+CaO+SrO+BaO) is 0.35 or more,
MgO/(MgO+CaO) is 0.40 or more, and
MgO/(MgO+SrO) is 0.60 or more.
Also, the present invention provides a production method for a non-alkali glass, containing mixing a glass raw material so as to have the following glass composition, putting it in a melting furnace, heating to a temperature of 1,350 to 1,750°C to prepare a molten glass, and forming the molten glass into a sheet shape,
in which the heating in the melting furnace concurrently utilizes heating by combustion flame of a burner arid electrical heating of the molten glass by a heating electrode arranged so as to be dipped in the molten glass in the melting furnace, and
in which when electrical resistivity at 1,350°C of the molten glass is represented by Rg ($\Omega$cm) and electrical resistivity at 1,350°C of a refractory constituting the melting furnace is represented by Rb ($\Omega$cm), the glass raw material and the refractory are selected so as to achieve Rb>Rg:
in terms of mol% on the basis of oxides thereof:

| | |
|---|---|
| $SiO_2$ | 66 to 70, |
| $Al_2O_3$ | 12 to 15, |
| $B_2O_3$ | 0 to 1.5, |
| MgO | 5 to 9.5, |
| CaO | 4 to 11 |
| SrO | 0.5 to 4.5, |
| BaO | 0 to 1, |
| $ZrO_2$ | 0 to 2; and |

containing an alkali metal oxide in an amount of 600 to 2,000 ppm,
in which MgO+CaO+SrO+BaO is more than 18.2 and 21 or less,
MgO/( MgO+CaO+SrO+BaO) is 0.25 or more,
MgO/(MgO+CaO) is 0.40 or more,
MgO/(MgO+SrO) is 0.60 or more, and
$Al_2O_3 \times$(MgO/(MgO+CaO+SrO+BaO)) is 5.5 or more.

ADVANTAGE OF THE INVENTION

According to the method of the present invention, a non-alkali glass in which temperature $T_2$ at which glass viscosity reaches $10^2$ dPa·s is 1,710°C or lower, strain point is 725°C or higher, an average coefficient of thermal expansion in a range of from 50 to 300°C is from $30\times10^{-7}$ to $40\times10^{-7}$/°C, and temperature $T_4$ at which glass viscosity reaches $10^4$dPa·s is 1,320°C or lower can be preferably produced.

The non-alkali glass produced by the method of the present invention is particularly suitable for use in a substrate for a display in high strain point uses, a substrate for a photomask, and the like, and is a glass particularly easily float-formed.

In the present invention, by concurrently using heating by combustion frame of a burner and electrical heating of a molten glass in a melting furnace in the heating in a melting furnace, erosion of a refractory constituting the melting furnace in heating at high temperature of from 1,350 to 1,750°C can be suppressed. By this, components of a refractory are suppressed from being melted in a molten glass, and the quality of a non-alkali glass produced is improved.

In the present invention, the flow of electric current into a refractory constituting a melting furnace from a heating electrode is suppressed during electrical heating of a molten glass. By this, utilization efficiency of the electric quantity used during electrical heating is improved. Furthermore, if electric current flows in a refractory constituting a melting furnace, there is a concern that electric current also flows into a metal member (such as metal frame) neighboring a melting furnace and causes electrical shock and that electrical heating occurs in a refractory and the temperature of the refractory is increased to thereby cause erosion of the refractory. The present invention solves those problems.

BRIEF DESCRIPTION OF THE DRAWING

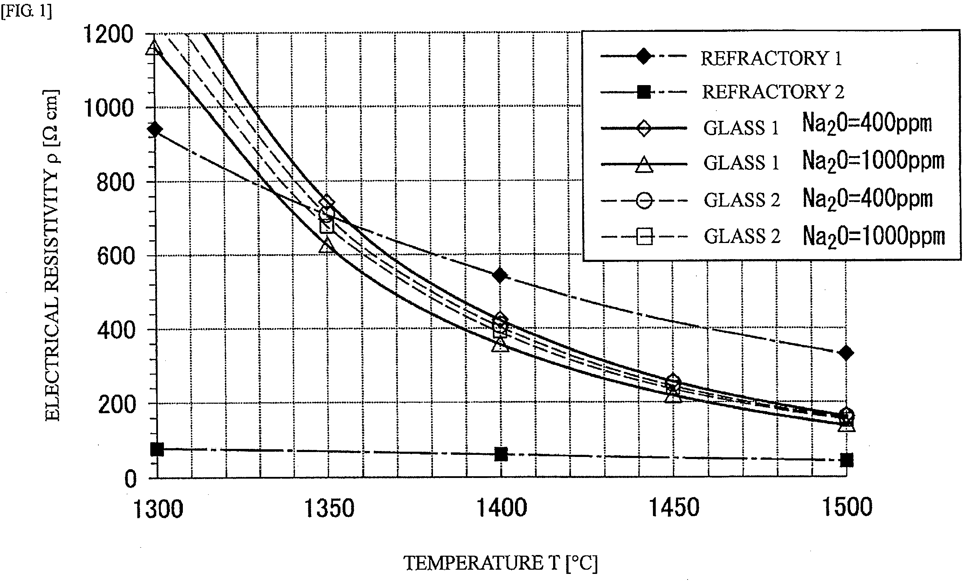

[FIG. 1] Fig. 1 is a graph showing measurement results of electrical resistivity of the molten glass (Glass 1 and Glass 2) in the Examples and the refractories (Refractory 1 and Refractory 2).

MODE FOR CARRYING OUT THE INVENTION

The production method for a non-alkali glass according to the present invention is described below.

In the production method for a non-alkali glass according to the first embodiment of the present invention, a glass raw material mixed so as to have the following glass composition 1 is used:
in terms of mol% based on the oxides,

$SiO_2$ 66 to 70,
$Al_2O_3$ 12 to 15,
$B_2O_3$ 0 to 1.5,
MgO more than 9.5 and 13 or less,
CaO 4 to 9,
SrO 0.5 to 4.5,
BaO 0 to 1, and
$ZrO_2$ 0 to 2;

containing an alkali metal oxide in an amount of 600 to 2,000 ppm,
in which MgO+CaO+SrO+BaO is 17 to 21,
MgO/(MgO+CaO+SrO+BaO) is 0.35 or more,
MgO/(MgO+CaO) is 0.40 or more, and
MgO(MgO+SrO) is 0.60 or more.

In the production method for a non-alkali glass according to the second embodiment of the present invention, a glass raw material mixed so as to have the following glass composition 2 is used:
in terms of mol% based on the oxides,

$SiO_2$ 66 to 70,
$Al_2O_3$ 12 to 15,
$B_2O_3$ 0 to 1.5,
MgO 5 to 9.5,
CaO 4 to 11
SrO 0.5 to 4.5,

(continued)

| | |
|---|---|
| BaO | 0 to 1, and |
| ZrO$_2$ | 0 to 2; |

containing an alkali metal oxide in an amount of 600 to 2,000 ppm,
in which MgO+CaO+SrO+BaO is more than 18.2 and 21 or less,
MgO/(MgO+CaO+SrO+BaO) is 0.25 or more,
MgO/(MgO+CaO) is 0.40 or more,
MgO(MgO+SrO) is 0.60 or more, and
Al$_2$O$_3$×(MgO/(MgO+CaO+SrO+BaO)) is 5.5 or more.

Composition range of each component is described below. If SiO$_2$ is less than 66% (mol%, unless otherwise indicated, thereinafter the same), strain point is not sufficiently increased, and additionally thermal expansion coefficient is increased, and density is increased. If it exceeds 70%, meltability of a glass is deteriorated and devitrification temperature is increased. It is preferably 67 to 70%.

Al$_2$O$_3$ suppresses phase separation properties of a glass, decreases thermal expansion coefficient and increases strain point. However, in the case of less than 12%, this effect is not developed, and further, since such case leads to an increase of other components enhancing expansion, thermal expansion increases as a result. If it exceeds 15%, there is a concern that meltability of a glass is deteriorated and devitrification temperature is increased. It is preferably 14.5% or less, more preferably 14% or less, and still more preferably 12.2 to 13.8%.

B$_2$O$_3$ improves meltability of a glass and decreases devitrification temperature. Therefore, it can be added up to 1.5%. However, if it is too large, strain point is decreased. Therefore, it is preferably 1% or less. Considering environmental load, it is preferred that it is not substantially contained. The term "not substantially contained" means that it is not contained except for unavoidable impurities (hereinafter the same).

Of alkaline earth metals, MgO has the characteristics that it does not enhance expansion and does not excessively decrease strain point, and improves meltability.

In the glass composition 1, the MgO content is more than 9.5 and 13% or less. If it is 9.5% or less, there is a concern that the effect by the addition of MgO mentioned above is not sufficiently developed. However, if it exceeds 13%, there is a concern that devitrification temperature is increased. It is more preferably 12.5% or less, 12% or less, or 11.5% or less.

In the glass composition 2, the MgO content is 5 to 9.5%. If it is less than 5%, the effect by the addition of MgO mentioned above is not sufficiently developed. Therefore, it is more preferably 6% or more, or 7% or more. However, if it exceeds 9.5%, there is a concern that devitrification temperature is increased. It is more preferably 9.3% or less, or 9% or less.

Of alkaline earth metals, CaO has the characteristics that it does not enhance expansion and does not excessively decrease strain point, next to MgO, and improves meltability.

In the glass composition 1, the CaO content is 4 to 9%. If it is less than 4%, the effect by the addition of CaO mentioned above is not sufficiently developed. However, if it exceeds 9%, there is a concern that devitrification temperature is increased or a large amount of phosphorus that is an impurity in limestone (CaCO$_3$) that is a raw material of CaO is contaminated. It is more preferably 7% or less, 6% or less, or 5% or less.

On the other hand, in the glass composition 2, the CaO content is 4 to 11 %. If it is less than 4%, the effect by the addition of CaO mentioned above is not sufficiently developed. It is preferably 5% or more. However, if it exceeds 11%, there is a concern that devitrification temperature is increased or a large amount of phosphorus that is an impurity in limestone (CaCO$_3$) that is a raw material of CaO is contaminated. It is 10% or less, 7% or less, and more preferably 6% or less.

SrO does not increase devitrification temperature of a glass and improves meltability. However, if it is less than 0.5%, this effect is not sufficiently developed. It is preferably 1.0% or more, and more preferably 2.0% or more. However, if it exceeds 4.5%, there is a concern that an expansion coefficient is increased. It is preferably 4.0% or less, or 3.5% or less.

BaO is not essential, but can be contained for the purpose of improving meltability. However, if it is too large, expansion and density of a glass are excessively increased. Therefore, it should be set to 1% or less. It is more preferably less than 1%, or 0.5% or less. It is further preferred that it is not substantially contained.

ZrO$_2$ may be contained in an amount up to 2% for the purpose of decreasing glass melting temperature or accelerating precipitation of crystals during calcining. If it exceeds 2%, a glass becomes unstable, or dielectric constant ε of a glass is increased. It is preferably 1.5% or less, and it is desirable that it is not substantially contained.

In the glass composition 1, difficulties may arise in that meltability becomes poor if the total amount of MgO, CaO, SrO and BaO is less than 17%, and coefficient of thermal expansion cannot be decreased if it is larger than 21%. It is preferably 18% or more and 20% or less.

In the glass composition 2, difficulties may arise in that meltability becomes poor if the total amount of MgO, CaO, SrO and BaO is 18.2% or less, and coefficient of thermal expansion cannot be decreased if it is larger than 21%. It is preferably 20% or less.

In the glass composition 1, when the total amount of MgO, CaO, SrO and BaO satisfies the above condition and the following three requirements are satisfied, strain point can be increased without increasing devitrification temperature, and viscosity of a glass, particularly temperature $T_4$ at which glass viscosity reaches $10^4$ dPa·s, can be decreased.

MgO/(MgO+CaO+SrO+BaO) is 0.35 or more, preferably 0.40 or more, and more preferably 0.45 or more.

MgO/(MgO+CaO) is 0.40 or more, preferably 0.52 or more, and more preferably 0.55 or more.

MgO/(MgO+SrO) is 0.60 or more, and preferably 0.70 or more.

In the glass composition 2, when the total amount of MgO, CaO, SrO and BaO satisfies the above condition and the following three requirements are satisfied, strain point can be increased without increasing devitrification temperature, and viscosity of a glass, particularly temperature $T_4$ at which glass viscosity reaches $10^4$ dPa·s, can be decreased.

MgO/(MgO+CaO+SrO+BaO) is 0.25 or more, preferably 0.3 or more, more preferably 0.4 or more, and still more preferably 0.45 or more.

MgO/(MgO+CaO) is 0.4 or more, preferably 0.52 of more, and more preferably 0.55 or more.

MgO/(MgO+SrO) is 0.6 or more, and preferably 0.7 or more.

In the glass composition 2, when $Al_2O_3 \times ($ MgO/(MgO+CaO+SrO+BaO)) is 5.5 or more, Young's modulus can be increased, and which is preferred. It is preferably 5.75 or more, more preferably 6.0 or more, still more preferably 6.25 or more, and particularly preferably 6.5 or more.

In the production method for a non-alkali glass of the present invention, an alkali metal oxide is contained in a glass raw material in an amount of 600 to 2,000 ppm (mol) for the purpose of electrically heating a molten glass in a melting furnace.

The non-alkali glass, as compared with an alkali glass such as soda lime glass, has a low content of an alkali metal oxide and a small amount of alkali metal ions present in a molten glass, thus has low conductivity, and is not inherently suitable for electrical heating.

In the present invention, by containing an alkali metal oxide in an amount of 600 ppm or more in a glass raw material, alkali metal ions in a molten glass are increased, resulting in decrease in electrical resistivity of the molten glass. As a result, conductivity of the molten glass is improved, and electrical heating becomes possible.

Here, when the content of an alkali metal oxide is increased, alkali metal ions diffuse in a thin film, leading to deterioration in film characteristics, and this becomes a problem during the use as a substrate glass for various displays. However, when the content of the alkali metal oxide in a glass composition is 2,000 ppm or less, preferably 1,500 ppm or less, more preferably 1,300 ppm or less, and still more preferably 1,000 ppm or less, such a problem does not occur.

The glass raw material used in the present invention contains an alkali metal oxide in an amount of preferably 1,500 ppm or less, more preferably 1,300 ppm or less, and still more preferably 1,000 ppm or less, and it is further preferred to contain from 700 to 900 ppm, and more preferably from 700 to 800 ppm.

Examples of the alkali metal oxide include $Na_2O$, $K_2O$ and $Li_2O$. From the standpoints of the effect of decreasing electrical resistivity of a molten glass, costs of raw material, and balance, $Na_2O$ and $K_2O$ are preferred, and $Na_2O$ is more preferred.

It is preferred that the glass raw material does not substantially contain $P_2O_5$ so as not to cause deterioration in characteristics of a metal or oxide thin film provided on the surface of a glass when manufacturing a panel. To facilitate recycle of a glass, it is preferred that the glass raw material does not substantially contain PbO, $As_2O_3$ and $Sb_2O_3$.

To improve meltability, clarity and formability of a glass, ZnO, $Fe_2O_3$, $SO_3$, F, Cl and $SnO_2$ can be added in the total amount of 5% or less to the glass raw material.

The non-alkali glass produced by the method of the present invention has relatively low meltability. Therefore, the followings are preferably used as a raw material of each component.

(Silicon source)

Silica sand can be used as a silicon source of $SiO_2$. Use of silica sand in which median particle diameter $D_{50}$ is from 20 μm to 27 μm, the proportion of particles having particle diameter of 2 μm or less is 0.3 vol% or less, and the proportion of particles having particle diameter of 100 μm or more is 2.5 vol% or less can suppress agglomeration of silica sand and facilitate melting. As a result, melting of silica sand becomes easy, and a non-alkali glass having less bubbles, and high homogeneity and flatness is obtained, and which is preferred.

The term "particle diameter" in the present description is a sphere equivalent diameter (in the present invention, it means primary particle diameter) of silica sand, and specifically means a particle diameter in a particle size distribution of powder sample measured by a laser diffraction/scattering method.

The term "median particle diameter $D_{50}$" in the present description means a particle diameter at which in a particle size distribution of powder sample measured by a laser diffraction method, volume frequency of particles having a particle diameter larger than a certain particle diameter occupies 50% of that of the whole powder. In other words, it means a particle diameter at which volume frequency is 50% in a particle size distribution of powder sample measured by a laser diffraction method.

The "proportion of particles having a particle diameter of 2 $\mu$m or less" and "proportion of particles having a particle diameter of 100 $\mu$m or more" in the present description are measured by, for example, measuring a particle size distribution by a laser diffraction/scattering method.

When the median particle diameter $D_{50}$ of silica sand is 25 $\mu$m or less, melting of silica sand becomes easier, and which is more preferred.

When the proportion of particles having a particle diameter of 100 $\mu$m or more in silica sand is 0%, melting of silica sand becomes easier and which is particularly preferred.

(Alkaline earth metal source)

An alkaline earth metal compound can be used as an alkaline earth metal source. Specific examples of the alkaline earth metal compound include carbonates such as $MgCO_3$, $CaCO_3$, $BaCO_3$, $SrCO_3$ and $(Mg, Ca)CO_3$ (dolomite); oxides such as MgO, CaO, BaO and SrO; and hydroxides such as $Mg(OH)_2$, $Ca(OH)_2$, $Ba(OH)_2$ and $Sr(OH)_2$. When a hydroxide of an alkaline earth metal is contained in a part or the whole of the alkaline earth metal source, an unmelted amount of $SiO_2$ component when melting a glass raw material is decreased, and which is preferred. If the unmelted amount of $SiO_2$ component contained in silica sand is increased, the unmelted $SiO_2$ is incorporated in bubbles when bubbles are generated in a molten glass, and gathers near a surface layer of the molten glass. By this, difference in composition ratio of $SiO_2$ is generated between the surface layer of the molten glass and the part other than the surface layer. As a result, homogeneity of a glass is decreased and flatness is also decreased.

The content of a hydroxide of an alkaline earth metal is preferably from 15 to 100 mol% (MO conversion, wherein M is an alkaline earth metal element), more preferably from 30 to 100 mol% (MO conversion) and still more preferably from 60 to 100 mol% (MO conversion), out of 100 mol% (MO conversion) of the alkaline earth metal source, because the unmelted amount of $SiO_2$ component during melting the glass raw material is decreased and this is more preferred.

The unmelted amount of $SiO_2$ component during melting the glass raw material is decreased as a molar ratio of hydroxides in the alkaline earth metal source is increased. Therefore, higher molar ratio of the hydroxides is preferred.

Specifically, as the alkaline earth metal source, use can be made of a mixture of a hydroxide and carbonate of an alkaline earth metal, a hydroxide alone of an alkaline earth metal, and the like. At least one of $MgCO_3$, $CaCO_3$ and $(Mg, Ca)(CO_3)_2$ (dolomite) is preferably used as the carbonate. At least one of $Mg(OH)_2$ and $Ca(OH)_2$ is preferably used as the hydroxide of the alkaline earth metal, and $Mg(OH)_2$ is particularly preferably used.

(Boron source)

In the case where a non-alkali glass contains $B_2O_3$, a boron compound can be used as a boron source of $B_2O_3$. Specific examples of the boron compound include orthoboric acid ($H_3BO_3$), metaboric acid ($HBO_2$), tetraboric acid ($H_2B_4O_7$) and boric anhydride ($B_2O_3$). In the general production of a non-alkali glass, orthoboric acid is used from the standpoints of inexpensiveness and easy availability.

In the present invention, a boron source containing boric anhydride in an amount of from 10 to 100 mass% ($B_2O_3$ conversion) of 100 mass% ($B_2O_3$ conversion) of the boron source is preferably used. When boric anhydride is contained in an amount of 10 mass% or more, agglomeration of the glass raw material can be suppressed, and effect of decreasing bubbles and improvement in homogeneity and flatness can be obtained. The boric anhydride is more preferably from 20 to 100 mass%, and still more preferably from 40 to 100 mol%.

Orthoboric acid is preferred as a boron compound other than boric anhydride, from the standpoints of inexpensiveness and easy availability.

In the present invention, the glass raw material mixed so as to have the above composition is continuously put into a melting furnace and heated at 1,350 to 1,750°C to melt it.

The heating in the melting furnace concurrently utilizes the heating by combustion flame of a burner and the electrical heating of the molten glass in the melting furnace.

The burner is arranged upper the melting furnace, and the heating is conducted by combustion flame of fossil fuels, specifically, by combustion flame of liquid fuels such as heavy oil and kerosene, or gas fuels such as LPG. During the combustion of those fuels, the fuel can be mixed with an oxygen gas to burn, or the fuel can be mixed with an oxygen gas and air to burn. By using those methods, water can be contained in molten glass and $\beta$-OH value of the non-alkali glass produced can be controlled.

On the other hand, the electrical heating of molten glass in the melting furnace is conducted by applying direct current voltage or alternating current voltage to a heating electrode provided at the bottom or side of the melting furnace so as to be dipped in the molten glass in the melting furnace. When performing the electrical heating, it is preferred that potential difference between electrodes is maintained at 100 to 500V, as described hereinafter. To apply such direct current voltage, alternating current utilizable as a commercial power source must be converted into direct current. Therefore, the application of alternating current voltage is preferred.

During the electrical heating of the molten glass, the application of alternating current voltage so as to satisfy the requirements described below is preferred from the standpoints of suppression of electrolysis of the molten glass in the melting furnace and generation of bubbles thereby, and efficiency during the electrical heating.

Local current density: 0.1 to 2.0 A/cm$^2$.

Potential difference between electrodes: 20 to 500V.

Frequency of alternating current voltage: 10 to 90 Hz.

The local current density is more preferably from 0.2 to 1.7 A/cm$^2$, and still more preferably from 0.3 to 1.0 A/cm$^2$.

The potential difference between electrodes is more preferably from 30 to 480V, and still more preferably from 40 to 450V.

The frequency of alternating current voltage is more preferably from 30 to 80 Hz, and still more preferably from 50 to 60 Hz.

A material used in the heating electrode is required to have not only excellent conductivity but also excellent heat resistance and erosion resistance to a molten glass because it is dipped in the molten glass in a melting furnace.

Examples of the materials satisfying those requirements include rhodium, iridium, osmium, hafnium, molybdenum, tungsten, platinum and alloys thereof.

In the present invention, it is preferred that when the total of heating quantity by combustion flame of a burner and heating quantity by electrical heating of a molten glass in a melting furnace is represented by To (J/h), the heating quantity T (J/h) by the electrical heating satisfies the following formula.

$$0.10 \times T_0 \leq T \leq 0.40 \times T_0$$

If T is smaller than $0.10 \times T_0$, there is a concern that the effect of concurrently using electrical heating of a molten glass, that is, the effect of suppressing erosion of a refractory constituting a melting furnace, becomes insufficient.

If T is larger than $0.40 \times T_0$, there is a concern that the temperature at the bottom of a melting furnace is increased and erosion of a refractory proceeds.

Because the melting furnace is heated to high temperature of from 1,350 to 1,750°C when melting the glass raw material, a refractory is used as a constituent material thereof. The refractory constituting the melting furnace is required to have erosion resistance to a molten glass, mechanical strength and oxidation resistance, in addition to heat resistance.

A zirconia-based refractory containing 90 mass% or more of $ZrO_2$ has been preferably used as a refractory constituting a melting furnace because it has excellent erosion resistance to a molten glass.

However, the zirconia-based refractory contains alkali components (e.g., $Na_2O$ and $K_2O$) as components reducing viscosity of a matrix glass in the total amount of 0.12 mass% or more. Therefore, it shows ionic conductivity due to the presence of the alkali components when heated to a high temperature of from 1,350 to 1,750°C. For this reason, there is a concern that electric current flows not only in a molten glass, but also in the refractory constituting a melting furnace from a heating electrode provided in the melting furnace during the electrical heating.

In the present invention, the glass raw material and the refractory constituting a melting furnace are selected to as to be Rb>Rg when electrical resistivity at 1,350°C of a molten glass is represented by Rg ($\Omega$cm) and electrical resistivity at 1,350°C of the refractory constituting a melting furnace is represented by Rb ($\Omega$cm).

As shown in examples described hereinafter, the electrical resistivities of a molten glass and a refractory are decreased as temperature increases. The decrease in electrical resistivity to the increase in temperature is larger in a molten glass than a refractory. Therefore, if the electrical resistivity at 1,350°C has the relationship of Rb>Rg, the electrical resistivity of the refractory is always larger than that of the molten glass at the higher temperature, that is, in a temperature range of from 1,350 to 1,750°C.

When s glass raw material and a refractory constituting a melting furnace are selected to as to be Rb>Rg, electric current is suppressed from flowing in the refractory constituting a melting furnace from a heating electrode during the electrical heating.

In the present invention, the ratio (Rb/Rg) between Rb and Rg preferably satisfies Rb/Rg>1.00, more preferably Rb/Rg>1.05, and still more preferably Rb/Rg>1.10.

In the case of the non-alkali glass having the above-described glass composition 1 or 2, Rg can be controlled by changing the content of alkali metal oxides in a range of from 600 to 2,000 ppm. Rg is decreased as the content of alkali metal oxides is increased.

Rg can be controlled also by changing the temperature $T_2$ at which viscosity $\eta$ of the non-alkali glass produced reaches $10^2$ poises (dPa·s). Rg is decreased as $T_2$ is decreased.

In the case of preferred composition of a refractory described hereinafter, Rb can be controlled by changing the content of alkali components (e.g., $Na_2O$ and $K_2O$). Rb can be controlled also by changing the proportion of $K_2O$ in the alkali components. Rb is increased as the content of alkali components (e.g., $Na_2O$ and $K_2O$) decreases. Rb is increased as the proportion of $K_2O$ in the alkali components increases.

Example of a refractory satisfying Rb>Rg to the non-alkali glasses having the above-described glass composition 1 or 2 includes high zirconia fused cast refractory containing, in mass%, from 85 to 91% of $ZrO_2$, from 7.0 to 11.2% of $SiO_2$, from 0.85 to 3.0% of $Al_2O_3$, from 0.05 to 1.0% of $P_2O_5$, from 0.05 to 1.0% of $B_2O_3$, and from 0.01 to 0.12% of $K_2O$ and $Na_2O$ in the total amount, in which the amount of $K_2O$ is larger than that of $Na_2O$.

The high zirconia fused cast refractory having the above composition is a refractory in which the major portion as from 85 to 91% of the chemical component is zirconia ($ZrO_2$); comprises baddeleyite crystals as a main constituent component; shows excellent erosion resistance to a molten glass; has small content of alkali components; and mainly contains $K_2O$ having large ionic radius and small mobility as the alkali component. Therefore, its electrical resistivity in a temperature range of from 1,350 to 1,750°C is large.

Composition range of each component is described below.

As for a high zirconia fused cast refractory, erosion resistance to a molten glass is improved as the content of $ZrO_2$ in a refractory increases. Therefore, it is set to 85% or more, and preferably 88% or more. However, if the content of $ZrO_2$ is larger than 91%, the amount of a matrix glass is relatively decreased, volume change due to transformation (that is, implantation) of baddeleyite crystals cannot be absorbed, and resistance to heat cycle is deteriorated. Therefore, it is set to 91% or less.

$SiO_2$ is an essential component for forming a matrix glass buffering stress generated in a refractory, and is required to be contained in an amount of 7.0% or more in order to obtain a crack-free actual use-scale fused cast refractory. However, if the content of $SiO_2$ component is larger than 11.2%, erosion resistance to a molten glass is decreased. Therefore, it is set to 11.2% or less, and preferably 10.0% or less.

$Al_2O_3$ plays a role of adjusting the relationship between temperature and viscosity of a matrix glass, and further has an effect of reducing the content of $ZrO_2$ in the matrix glass. When the content of $ZrO_2$ in the matrix glass is small, precipitation of zircon ($ZrO_2 \cdot SiO_2$) crystals in the matrix glass, which is observed in the conventional refractory, is suppressed, and cumulative tendency of residual volume expansion is remarkably decreased.

In order to effectively reduce the content of $ZrO_2$ in a matrix glass, the content of $Al_2O_3$ in a refractory is set to 0.85% or more, and preferably 1.0% or more. The content of $Al_2O_3$ is set to 3.0% or less so as not to cause precipitation of crystals such as mullite in a matrix glass to cause alteration of the matrix glass, and not to generate cracks in the refractory, in the course of casting or using a refractory.

Therefore, the content of $Al_2O_3$ in high zirconia fused cast refractory is from 0.85 to 3.0%, and preferably from 1.0 to 3.0%. In the high zirconia fused cast refractory which is cast by adjusting the refractory composition to such a range, resistance to heat cycle, that is, volume increase due to accumulation of residual volume expansion, is suppressed within a range free of practical problems, and chip-off phenomenon is remarkably improved.

When $B_2O_3$ and $P_2O_5$ are contained in addition to a small amount of alkali components, viscosity of a matrix glass at 800 to 1,250°C is adjusted to an appropriate degree even though the content of alkali components is small, and even if heat cycle passing through a transition temperature range of baddeleyite crystals is received repeatedly during the use, residual volume expansion is slight. Therefore, there is no tendency of causing cracks due to accumulation of the residual volume expansion.

$B_2O_3$ is mainly contained in a matrix glass together with $P_2O_5$, and is a component that co-acts with $P_2O_5$ in place of alkali components, softens the matrix glass, and does not reduce electrical resistivity of the refractory in a temperature range of 1,350 to 1,750°C.

When the content of $B_2O_3$ is 0.05% or more, it develops the effect of adjusting viscosity of a matrix glass because the amount of a matrix glass in the high zirconia fused cast refractory is small. However, if the content of $B_2O_3$ is too large, a fine fused cast refractory cannot be cast. Therefore, the content of $B_2O_3$ is set to from 0.05 to 1.0%, and preferably from 0.10 to 1.0%.

Almost all of $P_2O_5$ is contained in a matrix glass together with $B_2O_3$ and alkali components, and adjusts (softens) viscosity of the matrix glass in a transformation temperature range of baddeleyite crystals, thereby preventing occurrence of cracks due to stress generated by volume change associated with transformation of baddeleyite crystals. Further, $P_2O_5$ and $B_2O_3$ are components that do not have a concern of coloring glass even though those may elute in the glass when the refractory is used in a glass melting furnace. Moreover, when $P_2O_5$ is added to refractory raw materials, melting of the refractory raw materials becomes easy, and therefore there is an advantage that consumption of electric power required to cast a refractory can be reduced.

Since the amount of matrix glass in a high zirconia fused cast refractory is small, the content of $P_2O_5$ in the matrix glass is relatively large even though the content of $P_2O_5$ in the refractory is small. Therefore, the effect of adjusting viscosity of the matrix glass can be obtained when $P_2O_5$ is contained in the refractory in an amount of 0.05% or more. If the content of $P_2O_5$ is larger than 1.0%, the matrix glass are changed in its the properties and shows tendency of promoting residual volume expansion of a refractory and occurrence of cracks due to its accumulation. Therefore, the content of $P_2O_5$ in the refractory suitable for the adjustment of viscosity of matrix glass is from 0.05 to 1.0%, and preferably from 0.1 to 1.0%.

To achieve sufficiently large value of electrical resistivity of the refractory in a temperature range of from 1,350 to 1,750°C, the total amount of the contents of alkali components composed of $K_2O$ and $Na_2O$ is set to 0.12% or less in terms of oxides, and $K_2O$ having small ion mobility in glass occupies 50% or more and preferably 70% or more, of the alkali components. However, if the total content of $K_2O$ and $Na_2O$ is less than 0.01%, it becomes difficult to produce a fused cast refractory without cracks. Therefore, the total content of $K_2O$ and $Na_2O$ is set to 0.01% or more. Furthermore, the content of $K_2O$ is set larger than the content of $Na_2O$ such that a crack-free high zirconia fused cast refractory can be stably cast. It is preferred that content of $Na_2O$ is set to 0.008% or more and the content of $K_2O$ is set to from 0.02 to 0.10%.

When the total amount of the contents of $Fe_2O_3$ and $TiO_2$ contained as impurities in the raw material is 0.55% or less, there is no problem on coloration of the non-alkali glasses having the above-described glass compositions 1 and 2 in a melting furnace. The total content is preferably an amount not exceeding 0.30%. It is not necessary to contain alkaline earth oxides in a refractory, and the total content of the alkaline earth oxides is preferably less than 0.10%.

The refractory constituting a melting furnace is preferably a high zirconia fused cast refractory containing from 88 to 91% of $ZrO_2$, from 7.0 to 10% of $SiO_2$, from 1.0 to 3.0% of $Al_2O_3$, from 0.10 to 1.0% of $P_2O_5$, and from 0.10 to 1.0% of $B_2O_3$ as chemical components.

In the present invention, a non-alkali glass can be obtained by continuously putting the glass composition 1 or 2 mixed so as to be the above composition into a melting furnace, heating to a temperature of from 1,350 to 1,750°C to form a molten glass, and then forming the molten glass into a sheet shape by a float process, for example. More specifically, by forming into a sheet having a predetermined thickness by the float process, annealing and then cutting, the non-alkali glass can be obtained as a sheet glass.

The method for forming a sheet glass is preferably a float process, a fusion process, a roll-out process or a slot downdraw process. Considering productivity and the increasing size of a sheet glass, a float process is particularly preferred.

The non-alkali glass obtained by the method of the present invention (hereinafter referred to as the "non-alkali glass of the present invention") has strain point of 725°C or higher, and preferably higher than 730°C, and thus can suppress thermal shrinkage during the production of a panel. Furthermore, a solid phase crystallization method can be applied as a production method of p-Si TFT.

In the non-alkali glass of the present invention, the strain point is more preferably 735°C or higher. When the strain point is 735°C or higher, it is suitable for use in high strain point applications (for example, a substrate for a display for organic EL or a substrate for illumination, having a thickness of 0.7 mm or less, preferably 0.5 mm or less, and more preferably 0.3 mm or less, or a substrate for a display or a substrate for illumination, that is a thin plate having a thickness of 0.3 mm or less, and preferably 0.1 mm or less). In the forming of a sheet glass having a thickness of 0.7 mm or less, 0.5 mm or less, 0.3 mm or less, or 0.1 mm or less, the pull-out speed during the forming tends to become fast and therefore, fictive temperature of glass is increased and compaction of a glass is easily increased. In this case, when the glass has a high strain point, compaction can be suppressed.

The non-alkali glass of the present invention has glass transition point of preferably 760°C or higher, more preferably 770°C or higher, and still more preferably 780°C or higher.

The non-alkali glass of the present invention has an average coefficient of thermal expansion at a temperature in a range of from 50 to 300°C of from $30 \times 10^{-7}$ to $40 \times 10^{-7}$/°C, has large thermal shock resistance, and can increase productivity in panel production. In the non-alkali glass of the present invention, the average coefficient of thermal expansion at a temperature in a range of from 50 to 300°C is preferably from $35 \times 10^{-7}$ to $40 \times 10^{-7}$/°C.

The non-alkali glass of the present invention has specific gravity of preferably 2.65 or less, more preferably 2.64 or less, and still more preferably 2.62 or less.

The non-alkali glass of the present invention has temperature $T_2$ at which viscosity $\eta$ reaches $10^2$ poises (dPa·s) of 1,710°C or lower, preferably lower than 1,710°C, more preferably 1,700°C or lower, and still more preferably 1,690°C or lower. Therefore, melting of the glass is relatively easy.

The non-alkali glass of the present invention has temperature $T_4$ at which viscosity $\eta$ reaches $10^4$ poises of 1,320°C or lower, preferably 1,315°C or lower, more preferably 1,310°C or lower, and still more preferably 1,305°C or lower. Therefore, it is suitable for float forming.

It is preferred that the non-alkali glass of the present invention has devitrification temperature of 1,350°C or lower particularly because the forming by a float process becomes easy. It is preferably 1,340°C or lower, and more preferably 1,330°C or lower.

The devitrification temperature in the present description is an average value of maximum temperature at which crystals precipitate on the surface of and inside glass and minimum temperature at which crystals do not precipitate, by placing pulverized glass particles on a platinum dish, conducting heat treatment for 17 hours in an electric furnace controlled to a constant temperature, and observing with an optical microscope after the heat treatment.

The non-alkali glass of the present invention has Young's modulus of preferably 84 GPa or more, further, 86 GPa or more, further, 88 GPa or more, and further, 90 GPa or more.

The non-alkali glass of the present invention preferably has a photoelastic constant of 31 nm/MPa/cm or less.

When a glass substrate has birefringence due to stress generated in a liquid crystal display panel production step or during using a liquid crystal display device, phenomenon that black display becomes gray and contrast of the liquid crystal display is decreased is sometimes recognized. When the photoelastic constant is 31 nm/MPa/cm or less, the phenomenon can be suppressed small. It is preferably 30 nm/MPa/cm or less, more preferably 29 nm/MPa/cm or less, still more preferably 28.5 nm/MPa/cm or less, and particularly preferably 28 nm/MPa/cm or less.

Considering easiness of securing other properties, the non-alkali glass of the present invention has the photoelastic constant of preferably 23 nm/MPa/cm or more, and further, 25 nm/MPa/cm or more.

The photoelastic constant can be measured by a disk compression method.

The non-alkali glass of the present invention preferably has a dielectric constant of 5.6 or more.

In the case of an in-cell touch panel (having a touch sensor incorporated in a liquid crystal display panel) as described in JP-A-2011-70092, a glass substrate preferably has higher dielectric constant from the standpoints of improvement in sensitivity of a touch sensor, decrease in drive voltage and saving of electric power. When the dielectric constant is 5.6 or more, sensitivity of a touch sensor is improved. It is preferably 5.8 or more, more preferably 6.0 or more, still more preferably 6.2 or more, and particularly preferably 6.4 or more.

The dielectric constant can be measured by the method described in JIS C-2141.

$\beta$-OH value of a non-alkali glass can be appropriately selected depending on the required characteristics of the non-alkali glass. To increase strain point of the non-alkali glass, the $\beta$-OH value is preferably low. For example, in the case if the strain point is set to 745°C or higher, the $\beta$-OH value is preferably set to 0.3 mm$^{-1}$ or less, more preferably 0.25 mm$^{-1}$ or less, and still more preferably 0.2 mm$^{-1}$ or less.

The $\beta$-OH value can be controlled by various conditions at the time of melting a raw material, such as the amount of water in a glass raw material, the concentration of water vapor in a melting furnace, and the staying time of a molten glass in the melting furnace. A method for controlling the amount of water in a glass raw material includes a method of using a hydroxide in place of an oxide, as a glass raw material (for example, using magnesium hydroxide (Mg(OH)$_2$) in place of magnesium oxide (MgO) as a magnesium source). A method for controlling the concentration of water vapor in a melting furnace includes, when combusting with burners, a method of mixing fossil fuel with an oxygen gas to burn and a method of mixing with an oxygen gas and air to burn.

EXAMPLES

Electrical resistivities in a temperature range of from 1,350 to 1,750°C of a molten glass and a refractory (zirconia electrocast refractory) were measured.

Molten glasses (Glass 1 and Glass 2) were prepared by mixing raw materials of each component so as to have each composition shown below, and melting them at a temperature of 1,600°C by using a platinum crucible. In the melting, homogenization of the glass was conducted with stirring by a platinum stirrer. Electrical resistivity of the molten glass thus obtained was measured with the method described in the following literature in the state of being held in a temperature range of from 1,350 to 1,750°C.

"Study on Measuring Method of the Electrical Conductivity of Ionic Solutions and Melts, Takao Ohta, Akira Miyanaga, Kenji Morinaga, and Tsutomu Yanagase, Journal of the Japan Institute of Metals and Materials, Vol. 45, No. 10 (1981) p1036-1043"

[Glass 1]

| Composition (mol% on the basis of oxides) | |
|---|---|
| SiO$_2$ | 67.0 |
| Al$_2$O$_3$ | 13.5 |
| B$_2$O$_3$ | 0 |
| MgO | 9.7 |
| CaO | 5.4 |
| SrO | 4.4 |

(continued)

| | |
|---|---|
| BaO | 0 |
| ZrO$_2$ | 0 |
| MgO+CaO+SrO+BaO | 19.5 |
| MgO/(MgO+CaO+SrO+BaO) | 0.50 |
| MgO/(MgO+CaO) | 0.64 |
| MgO/(MgO+SrO) | 0.69 |

[Glass 2]

| Composition (mol% on the basis of oxides) | |
|---|---|
| SiO$_2$ | 67.5 |
| Al$_2$O$_3$ | 13.9 |
| B$_2$O$_3$ | 0 |
| MgO | 7.5 |
| CaO | 8.6 |
| SrO | 2.5 |
| BaO | 0 |
| ZrO$_2$ | 0 |
| MgO+CaO+SrO+BaO | 18.6 |
| MgO/(MgO+CaO+SrO+BaO) | 0.40 |
| MgO/(MgO+CaO) | 0.47 |
| MgO/(MgO+SrO) | 0.75 |

In addition thereto, Na$_2$O was added by changing the amount to two different amounts of 400 ppm and 1,000 ppm, on the basis of the oxide.

Regarding zirconia electrocast refractories having the following chemical compositions and mineral compositions (Refractory 1 and Refractory 2), the electrical resistivities were measured by expanding the measurement principle of volume resistivity (Section 14) of "JIS C-2141, Testing Method of Electrical Insulating Ceramic Materials" to a high temperature (arranging the sample in an electric furnace and heating), in the state of being held in a temperature range of from 1,350 to 1,750°C.

[Refractory 1]

| Chemical composition (mass%) | |
|---|---|
| ZrO$_2$ | 88 |
| SiO$_2$ | 9.3 |
| Al$_2$O$_3$ | 1.5 |
| P$_2$O$_5$ | 0.1 |
| B$_2$O$_3$ | 0.8 |
| Fe$_2$O$_3$ | 0.05 |
| TiO$_2$ | 0.15 |
| Na$_2$O | 0.02 |
| K$_2$O | 0.04 |

| Mineral composition (mass%) | |
|---|---|
| Baddeleyite | 88 |
| Glass phase | 12 |

[Refractory 2]

| Chemical composition (mass%) | |
| --- | --- |
| $ZrO_2$ | 94.5 |
| $SiO_2$ | 4.0 |
| $Al_2O_3$ | 0.8 |
| $P_2O_5$ | 0.10 |
| $B_2O_3$ | 0.8 |
| $Fe_2O_3$ | 0.05 |
| $TiO_2$ | 0.15 |
| $Na_2O$ | 0.4 |
| $K_2O$ | 0.01 |

| Mineral composition (mass%) | |
| --- | --- |
| Baddeleyite | 88 |
| Glass phase | 12 |

Measurement results of the electrical resistivity are shown in Fig. 1. As is apparent from Fig. 1, in the case where the $Na_2O$ content of Glass 1 and Glass 2 was 1,000 ppm, Refractory 1 satisfied the relationship of Rb>Rg between electrical resistivity Rb at 1,350°C and electrical resistivity Rg of the molten glass at 1,350°C. Furthermore, even in a temperature range of from 1,350 to 1,750°C, the electrical resistivity of Refractory 1 was higher than that of the molten glass. If a melting furnace is constituted of Refractory 1, it is considered that electric current is prevented from flowing in the refractory constituting the melting furnace from heating electrodes during the electrical heating.

In the case where the $Na_2O$ content in Glass 1 and Glass 2 was 400 ppm, the electrical resistivities Rb and Rg at 1,350°C had the relationship of Rb<Rg.

On the other hand, Refractory 2 had the relationship of Rb<Rg between the electrical resistivity Rb at 1,350°C and the electrical resistivity Rg of the molten glass at 1,350°C, even in any case where the $Na_2O$ content in Glass 1 and Glass 2 was 400 ppm and 1,000 ppm. Furthermore, even in the temperature range of from 1,350 to 1,750°C, the electrical resistivity of Refractory 2 was lower than that of the molten glass. If a melting furnace is constituted of Refractory 2, it is considered that electric current flows in the refractory constituting the melting furnace from a heating electrode.

In the following Examples 1 to 11 and 14 to 28 are Invention Examples and Examples 12 and 13 are Comparative Examples. One prepared by mixing raw materials of each component so as to be a target composition was put in a melting furnace constituted of Refractory 1, and melted at a temperature of from 1,500 to 1,600°C. Silica sand used in the raw material in this case has a particle size of the median particle diameter $D_{50}$ of 26 $\mu$m, the fraction of particles having a particle diameter of 2 $\mu$m or less of less than 0.1% and the fraction of particles having a particle diameter of 100 $\mu$m or more of 0.6%. The mass ratio (MO conversion) of a hydroxide raw material in an alkaline earth metal is 23$\pm$5%. For the heating of the melting furnace, heating by combustion flame of burners and electrical heating of the molten glass by heating electrodes arranged so as to be dipped in the molten glass in the melting furnace were used together. In performing the electrical heating, alternating current voltage was applied to the heating electrode under local current density of 0.5A/cm², potential difference between electrodes of 300V, and frequency of 50 Hz.

When the total of heating quantity by combustion flame of the burner and heating quantity by electrical heating of the molten glass in the melting furnace is represented by To (J/h), the heating quantity T (J/h) by the electrical heating satisfied the relationship of T=0.30$\times$T$_0$.

The molten glass was flown out, formed into a sheet, and then annealed.

Tables 1 to 4 show glass compositions (unit: mol%), a coefficient of thermal expansion at from 50 to300°C (unit: $\times 10^{-7}$/°C), strain point (unit: °C), glass transition temperature (unit: °C), specific gravity, Young's modulus (GPa) (measured by an ultrasonic wave method), as high temperature viscosity values, temperature $T_2$ providing an indication of meltability (temperature at which glass viscosity $\eta$ reaches $10^2$ poises, unit: °C) and temperature $T_4$ providing an indication of formability in a float process, fusion process, roll-out process, slot downdraw process and the like (temperature at which glass viscosity $\eta$ reaches $10^4$ poises, unit: °C), devitrification temperature (unit: °C), photoelastic constant (unit: nm/MPa/cm) (measured by a disk compression method at a measuring wavelength of 546 nm by using a sample formed into a sheet and then annealed), and dielectric constant (measured by the method described in JIS C-2141 by using a sample formed into a sheet and then annealed).

In Tables 1 to 4, the values in parenthesis are calculated values.

[Table 1]

| Mol% | Example 1 | Example 2 | Example 3 | Example 4 | Example 5 | Example 6 | Example 7 |
|---|---|---|---|---|---|---|---|
| $SiO_2$ | 67.4 | 68.4 | 68.4 | 67.9 | 67.4 | 68.4 | 68.4 |
| $Al_2O_3$ | 13.5 | 13.5 | 13.5 | 13.5 | 13.5 | 13.5 | 13.5 |
| $B_2O_3$ | 0 | 0 | 0 | 0 | 0 | 0 | 0 |
| MgO | 10.7 | 10.7 | 10.0 | 10.5 | 11.7 | 11.0 | 9.7 |
| CaO | 5.2 | 5.2 | 7.1 | 7.1 | 4.2 | 6.1 | 5.2 |
| SrO | 3.2 | 2.2 | 1.0 | 1.0 | 3.2 | 1.0 | 4.2 |
| BaO | 0 | 0 | 0 | 0 | 0 | 0 | 0 |
| $ZrO_2$ | 0 | 0 | 0 | 0 | 0 | 0 | 0 |
| MgO+CaO+SrO+BaO | 19.1 | 18.1 | 18.1 | 18.6 | 19.1 | 18.1 | 19.1 |
| MgO/(MgO+CaO+SrO+BaO) | 0.56 | 0.6 | 0.6 | 0.6 | 0.6 | 0.6 | 0.5 |
| MgO/(MgO+CaO) | 0.67 | 0.7 | 0.6 | 0.6 | 0.7 | 0.6 | 0.7 |
| MgO/(MgO+SrO) | 0.77 | 0.8 | 0.9 | 0.9 | 0.8 | 0.9 | 0.7 |
| $Al_2O_3\times$(MgO/(MgO+CaO+SrO+BaO)) | 7.56 | 7.98 | 7.46 | 7.62 | 8.27 | 8.20 | 6.86 |
| Average coefficient of thermal expansion [$\times 10^{-7}$/°C] | 37.0 | 34.7 | 35.3 | 37.9 | 37.9 | 35.5 | 37.7 |
| Strain point [°C] | (731) | (743) | (740) | (741) | (734) | (743) | (734) |
| Glass transition temperature [°C] | 783 | 795 | 792 | 793 | 786 | 795 | 787 |
| Specific gravity | 2.57 | 2.55 | 2.54 | 2.54 | 2.57 | 2.53 | 2.59 |
| Young's modulus [GPa] | (90.2) | (89.5) | (88.1) | (89.5) | 89.6 | (89.1) | (90.1) |
| $T_2$[°C] | 1648 | (1677) | (1686) | (1673) | (1645) | (1682) | 1652 |
| $T_4$[°C] | 1307 | (1314) | (1301) | (1291) | (1293) | (1298) | 1310 |
| Devitrification temperature [°C] | 1296 | 1320 or higher | 1320 or higher | 1310 | 1320 or higher | 1320 or higher | 1275 |
| Photoelastic constant [nm/MPa/cm] | (29.0) | (29.4) | (29.8) | (29.6) | (28.7) | (29.6) | (28.9) |
| Dielectric constant | (6.55) | (6.43) | (6.45) | (6.51) | (6.54) | (6.44) | (6.55) |

[Table 2]

| Mol% | Example 8 | Example 9 | Example 10 | Example 11 | Example 12 | Example 13 |
|---|---|---|---|---|---|---|
| $SiO_2$ | 67.9 | 67.9 | 67.1 | 67.0 | 68.7 | 68.4 |
| $Al_2O_3$ | 13.5 | 13.5 | 13.5 | 13.5 | 14.0 | 13.5 |
| $B_2O_3$ | 0 | 0 | 0 | 0 | 0.5 | 0 |
| MgO | 9.0 | 9.0 | 9.8 | 9.7 | 7.1 | 7.6 |
| CaO | 8.6 | 7.1 | 5.3 | 5.4 | 6.5 | 7.1 |
| SrO | 1.0 | 2.5 | 4.3 | 4.4 | 3.2 | 3.4 |
| BaO | 0 | 0 | 0 | 0 | 0 | 0 |
| $ZrO_2$ | 0 | 0 | 0 | 0 | 0 | 0 |
| MgO+CaO+SrO+BaO | 18.6 | 18.6 | 19.4 | 19.5 | 16.8 | 18.1 |
| MgO/(MgO+CaO+SrO+BaO) | 0.48 | 0.48 | 0.51 | 0.50 | 0.42 | 0.42 |
| MgO/(MgO+CaO) | 0.51 | 0.56 | 0.65 | 0.64 | 0.52 | 0.52 |
| MgO/(MgO+SrO) | 0.90 | 0.78 | 0.78 | 0.69 | 0.69 | 0.69 |
| $Al_2O_3\times$(MgO/(MgO+CaO+SrO+BaO)) | 6.48 | 6.48 | 6.89 | 6.75 | 5.88 | 5.67 |
| Average coefficient of thermal expansion [$\times 10^{-7}$/°C] | 36.3 | 38.0 | 38.2 | 39.7 | 36.4 | 38.1 |
| Strain point [°C] | (740) | (740) | (735) | (733) | 737 | 744 |
| Glass transition temperature [°C] | 791 | 792 | 785 | 783 | 796 | 796 |
| Specific gravity | 2.55 | 2.57 | 2.60 | 2.60 | 2.56 | 2.57 |
| Young's modulus [GPa] | 87.9 | (89.3) | 89.3 | (90.5) | 90.8 | 90.9 |
| $T_2$[°C] | 1653 | 1656 | 1647 | 1644 | 1705 | 1698 |
| $T_4$[°C] | 1309 | 1310 | 1303 | 1299 | 1327 | 1321 |
| Devitrification temperature [°C] | 1295 | 1285 | 1285 | 1290 | 1285 | 1295 |
| Photoelastic constant [nm/MPa/cm] | (30.0) | (29.6) | (28.8) | (28.8) | (30.0) | (29.8) |
| Dielectric constant | (6.53) | (6.51) | (6.59) | (6.60) | (6.34) | (6.46) |

[Table 3]

| Mol% | Example 14 | Example 15 | Example 16 | Example 17 | Example 18 | Example 19 | Example 20 |
|---|---|---|---|---|---|---|---|
| $SiO_2$ | 66.5 | 66.5 | 66.2 | 66.2 | 67.5 | 67.5 | 67.5 |
| $Al_2O_3$ | 13 | 13.2 | 13.3 | 13.7 | 13.5 | 13.8 | 13.3 |
| $B_2O_3$ | 0 | 0 | 0 | 0 | 0.5 | 1 | 0 |
| MgO | 12.7 | 12.2 | 10.5 | 11.3 | 10.7 | 9.8 | 11.1 |
| CaO | 4.7 | 5.5 | 8.5 | 4.9 | 4.5 | 4.5 | 5.2 |
| SrO | 3.1 | 2.6 | 1.5 | 3.9 | 3.3 | 3.4 | 2.3 |
| BaO | 0 | 0 | 0 | 0 | 0 | 0 | 0.6 |
| $ZrO_2$ | 0 | 0 | 0 | 0 | 0 | 0 | 0 |
| MgO+CaO+SrO+BaO | 20.5 | 20.3 | 20.5 | 20.1 | 18.5 | 17.7 | 19.2 |
| MgO/( MgO+CaO+SrO+BaO) | 0.62 | 0.60 | 0.51 | 0.56 | 0.58 | 0.55 | 0.58 |
| MgO/(MgO+CaO) | 0.73 | 0.69 | 0.55 | 0.70 | 0.70 | 0.69 | 0.68 |
| MgO/(MgO+SrO) | 0.80 | 0.82 | 0.88 | 0.74 | 0.76 | 0.74 | 0.83 |
| $Al_2O_3\times$(MgO/(MgO+CaO+SrO+BaO)) | 8.05 | 7.93 | 6.81 | 7.70 | 7.81 | 7.64 | 7.69 |
| Average coefficient of thermal expansion [$\times10^{-7}$/°C] | 37.7 | 37.3 | 39.1 | 38.7 | 36.2 | 35.5 | (35.9) |
| Strain point [°C] | (726) | (729) | (732) | (730) | (731) | (730) | (741) |
| Glass transition temperature [°C] | 794 | 791 | 795 | 794 | 796 | 793 | |
| Specific gravity | 2.58 | 2.58 | 2.57 | 2.60 | 2.57 | 2.56 | (2.56) |
| Young's modulus [GPa] | 91.3 | 91.4 | 91.4 | 90.7 | 89.8 | 89.1 | (88.8) |
| $T_2$[°C] | 1649 | 1649 | (1629) | 1653 | (1647) | 1677 | (1681) |
| $T_4$[°C] | 1294 | 1296 | (1273) | 1300 | (1310) | 1315 | (1312) |
| Devitrification temperature [°C] | 1312 | 1312 | | 1312 | | 1312 | |
| Photoelastic constant [nm/MPa/cm] | 29.9 | 29.6 | 30.0 | 28.9 | 29.2 | 28.0 | (29.4) |
| Dielectric constant | (6.66) | (6.66) | (6.73) | (6.67) | (6.46) | (6.39) | (6.62) |

EP 2 821 375 A1

[Table 4]

| Mol% | Example 21 | Example 22 | Example 23 | Example 24 | Example 25 | Example 26 | Example 27 | Example 28 |
|---|---|---|---|---|---|---|---|---|
| $SiO_2$ | 67.5 | 67.5 | 67.5 | 66.1 | 66.1 | 67.5 | 67.5 | 67.5 |
| $Al_2O_3$ | 12.7 | 13.3 | 13.7 | 14.1 | 13.8 | 13.3 | 12.7 | 13.9 |
| $B_2O_3$ | 0 | 0 | 0.5 | 1 | 0 | 0 | 0 | 0 |
| MgO | 11.3 | 9.3 | 8.8 | 8.8 | 8.5 | 8.2 | 8.4 | 7.5 |
| CaO | 5.4 | 6.5 | 7.3 | 5.5 | 8.3 | 7.9 | 8.1 | 8.6 |
| SrO | 2.5 | 3.4 | 2.2 | 4.5 | 3.3 | 2.5 | 2.7 | 2.5 |
| BaO | 0 | 0 | 0 | 0 | 0 | 0.6 | 0 | 0 |
| $ZrO_2$ | 0.6 | 0 | 0 | 0 | 0 | 0 | 0.6 | 0 |
| MgO+CaO+SrO+BaO | 19.2 | 19.2 | 18.3 | 18.8 | 20.1 | 19.2 | 19.2 | 18.6 |
| MgO/( MgO+CaO+SrO+BaO) | 0.59 | 0.48 | 0.48 | 0.47 | 0.42 | 0.43 | 0.44 | 0.40 |
| MgO/(MgO+CaO) | 0.68 | 0.59 | 0.55 | 0.62 | 0.51 | 0.51 | 0.51 | 0.47 |
| MgO/(MgO+SrO) | 0.82 | 0.73 | 0.80 | 0.66 | 0.72 | 0.77 | 0.76 | 0.75 |
| $Al_2O_3\times$(MgO/(MgO+CaO+SrO+BaO)) | 7.47 | 6.44 | 6.59 | 6.60 | 5.84 | 5.68 | 5.56 | 5.60 |
| Average coefficient of thermal expansion [$\times 10$/°C] | (35.2) | 38.4 | 37.0 | 38.4 | 39.6 | (37.9) | (37.2) | 36.3 |
| Strain point [°C] | (745) | (734) | (736) | (727) | (734) | (740) | (744) | 744 |
| Glass transition temperature [°C] |  | 795 | 798 | 792 | 796 |  |  | (792) |
| Specific gravity | (2.55) | 2.58 | 2.55 | 2.60 | 2.60 | (2.58) | (2.57) | 2.57 |
| Young's modulus [GPa] | (88.8) | 89.9 | 89.9 | 89.2 | 90.6 | (89) | (89) | (89) |
| $T_2$[°C] | (1674) | (1646) | (1662) | 1653 | (1622) | (1672) | (1665) | 1651 |
| $T_4$[°C] | (1310) | (1314) | (1312) | 1299 | (1297) | (1314) | (1312) | 1309 |
| Devitrification temperature [°C] |  |  |  | 1287 |  |  |  |  |
| Photoelastic constant [nm/MPa/cm] | (29.7) | 27.9 | 28.4 | 29.1 | 28.0 | (29.3) | (29.6) | (29.8) |
| Dielectric constant | (6.60) | (6.56) | (6.49) | (6.55) | (6.72) | (6.56) | (6.54) | (6.56) |

EP 2 821 375 A1

As is apparent from the Tables, glasses of the Invention Examples all have a low coefficient of thermal expansion as from $30 \times 10^{-7}$ to $40 \times 10^{-7}/°C$ and a high strain point as 725°C or higher, and are understood that they sufficiently withstand a heat treatment at high temperature.

The temperature $T_2$ providing an indication of meltability is relatively low as 1,710°C or lower, making melting easy. The temperature $T_4$ providing an indication of formability is 1,320°C or lower, making forming, particularly by a float method easy. The devitrification temperature is 1,350°C or lower. It is therefore considered that there is no trouble such as occurrence of devitrification particularly when float forming.

The photoelastic constant is 31 nm/MPa/cm or less. Therefore, in the case of using as a glass substrate of a liquid crystal display, decrease in contrast can be suppressed.

The dielectric constant is 5.6 or more. Therefore, in the case of using as a glass substrate of an in-cell touch panel, sensitivity of a touch sensor is improved.

Although the present invention has been described in detail and by reference to the specific embodiments, it is apparent to one skilled in the art that various modifications or changes can be made without departing the spirit and scope of the present invention.

This application is based on Japanese Patent Application No. 2012-040125 filed on February 27, 2012, the disclosure of which is incorporated herein by reference.

INDUSTRIAL APPLICABILITY

The non-alkali glass of the present invention has high strain point, and is therefore suitable for use in a substrate for a display, a substrate for a photomask, and the like. It is further suitable for use in a substrate for a solar cell, a glass substrate for a magnetic disk, and the like.

**Claims**

1. A production method for a non-alkali glass, comprising mixing glass raw materials so as to have the following glass composition, putting it in a melting furnace, heating to a temperature of 1,350 to 1,750°C to prepare a molten glass, and forming the molten glass into a sheet shape,

   wherein the heating in the melting furnace concurrently utilizes heating by combustion flame of burners and electrical heating of the molten glass by heating electrodes arranged so as to be dipped in the molten glass in the melting furnace, and

   wherein when electrical resistivity at 1,350°C of the molten glass is represented by Rg ($\Omega$cm) and electrical resistivity at 1,350°C of a refractory constituting the melting furnace is represented by Rb ($\Omega$cm), the glass raw materials and the refractory are selected so as to achieve Rb>Rg:

   in terms of mol% on the basis of oxides thereof:

   | | |
   |---|---|
   | $SiO_2$ | 66 to 70, |
   | $Al_2O_3$ | 12 to 15, |
   | $B_2O_3$ | 0 to 1.5, |
   | MgO | more than 9.5 and 13 or less, |
   | CaO | 4 to 9, |
   | SrO | 0.5 to 4.5, |
   | BaO | 0 to 1, |
   | $ZrO_2$ | 0 to 2; and |

   comprising an alkali metal oxide in an amount of 600 to 2,000 ppm,
   wherein MgO+CaO+SrO+BaO is 17 to 21,
   MgO/( MgO+CaO+SrO+BaO) is 0.35 or more,
   MgO/(MgO+CaO) is 0.40 or more, and
   MgO/(MgO+SrO) is 0.60 or more.

2. A production method for a non-alkali glass, comprising mixing glass raw materials so as to have the following glass composition, putting it in a melting furnace, heating to a temperature of 1,350 to 1,750°C to prepare a molten glass, and forming the molten glass into a sheet shape,

wherein the heating in the melting furnace concurrently utilizes heating by combustion flame of a burner and electrical heating of the molten glass by a heating electrode arranged so as to be dipped in the molten glass in the melting furnace, and

wherein when electrical resistivity at 1,350°C of the molten glass is represented by Rg ($\Omega$cm) and electrical resistivity at 1,350°C of the refractory constituting the melting furnace is represented by Rb ($\Omega$cm), the glass raw material and a refractory are selected so as to achieve Rb>Rg:

in terms of mol% on the basis of oxides thereof:

| | |
|---|---|
| $SiO_2$ | 66 to 70, |
| $Al_2O_3$ | 12 to 15, |
| $B_2O_3$ | 0 to 1.5, |
| MgO | 5 to 9.5, |
| CaO | 4 to 11 |
| SrO | 0.5 to 4.5, |
| BaO | 0 to 1, |
| $ZrO_2$ | 0 to 2; and |

comprising an alkali metal oxide in an amount of 600 to 2,000 ppm,
wherein MgO+CaO+SrO+BaO is more than 18.2 and 21 or less,
MgO/( MgO+CaO+SrO+BaO) is 0.25 or more,
MgO/(MgO+CaO) is 0.40 or more,
MgO/(MgO+SrO) is 0.60 or more, and
$Al_2O_3\times(MgO/(MgO+CaO+SrO+BaO))$ is 5.5 or more.

3. The production method for a non-alkali glass according to claim 1 or 2, wherein the glass raw materials and the refractory are selected such that a ratio (Rb/Rg) of the Rb to the Rg satisfies the following formula:

$$Rb/Rg>1.00.$$

4. The production method for a non-alkali glass according to any one of claims 1 to 3, wherein when the total of heating quantity by the combustion flame of the burner and heating quantity by the electrical heating of the molten glass in the melting furnace is represented by To (J/h), the heating quantity T (J/h) by the electrical heating satisfies the following formula:

$$0.10\times T_0 \leq T \leq 0.40\times T_0.$$

5. The production method for a non-alkali glass according to any one of claims 1 to 4, wherein the refractory constituting the melting furnace is a high zirconia fused cast refractory containing, as chemical components of the refractory, in mass%, 85 to 91 % of $ZrO_2$, 7.0 to 11.2% of $SiO_2$, 0.85 to 3.0% of $Al_2O_3$, 0.05 to 1.0% of $P_2O_5$, and 0.05 to 1.0% of $B_2O_3$, and 0.01 to 0.12% of $K_2O$ and $Na_2O$ in the total amount, wherein the amount of $K_2O$ is larger than that of $Na_2O$.

6. The production method for a non-alkali glass according to any one of claims 1 to 5, wherein alternating current voltage having a frequency of from 10 to 90 Hz is applied to the heating electrodes such that local current density is from 0.1 to 2.0 A/cm$^2$ and the potential difference between electrodes is from 20 to 500V.

7. The production method for a non-alkali glass according to any one of claims 1 to 6, wherein silica sand in which a median particle diameter $D_{50}$ is from 20 $\mu$m to 27 $\mu$m, the fraction of particles having a particle diameter of 2 $\mu$m or less is 0.3 vol% or less, and the proportion of particles having a particle diameter of 100 $\mu$m or more is 2.5 vol% or less is used as a silicon source of $SiO_2$ in the glass raw materials.

8. The production method for a non-alkali glass according to any one of claims 1 to 6, wherein one containing hydroxide of alkaline earth metal in an amount of from 15 to 100 mol% (MO conversion, wherein M represents an alkaline earth metal element, and the same shall apply below) out of 100 mol% (MO conversion) of an alkaline earth metal source is used as an alkaline earth metal source of MgO, CaO, SrO and BaO in the glass raw material.

9. The production method for a non-alkali glass according to any one of claims 1 to 6, wherein silica sand in which a median particle diameter $D_{50}$ is from 20 $\mu$m to 27 $\mu$m, the proportion of particles having a particle diameter of 2 $\mu$m or less is 0.3 vol% or less, and the proportion of particles having a particle diameter of 100 $\mu$m or more is 2.5 vol% or less is used as a silicon source of $SiO_2$ in the glass raw material, and one containing hydroxide of alkaline earth metal in an amount of from 15 to 100 mol% (MO conversion, wherein M represents an alkaline earth metal element, and the same shall apply below) out of 100 mol% (MO conversion) of an alkaline earth metal source is used as an alkaline earth metal source of MgO, CaO, SrO and BaO in the glass raw material.

[FIG. 1]

EP 2 821 375 A1

## INTERNATIONAL SEARCH REPORT

| | International application No. |
|---|---|
| | PCT/JP2013/054877 |

| A. CLASSIFICATION OF SUBJECT MATTER |
|---|
| *C03B5/027*(2006.01)i, *C03B5/235*(2006.01)i, *C03B5/43*(2006.01)i, *C03C3/087* (2006.01)i, *C03C3/091*(2006.01)i, *C03C3/093*(2006.01)i, *C04B35/48*(2006.01)i |

According to International Patent Classification (IPC) or to both national classification and IPC

| B. FIELDS SEARCHED |
|---|
| Minimum documentation searched (classification system followed by classification symbols) |
| C03B5/00-5/44, C03C1/00-14/00, C04B35/48 |

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
    INTERGLAD

| C. DOCUMENTS CONSIDERED TO BE RELEVANT |
|---|

| Category* | Citation of document, with indication, where appropriate, of the relevant passages | Relevant to claim No. |
|---|---|---|
| A | WO 2010/116960 A1  (Asahi Glass Co., Ltd.), 14 October 2010 (14.10.2010), claims; paragraphs [0008], [0033] to [0034], [0052] & EP 2418189 A1 claims; paragraphs [0008], [0034] to [0035], [0053] & US 2012/0036895 A1    & JP 2010-260782 A & KR 10-2012-0022715 A   & CN 102369170 A | 1-9 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 May, 2013 (27.05.13) | 04 June, 2013 (04.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/054877

C (Continuation).    DOCUMENTS CONSIDERED TO BE RELEVANT

| Category* | Citation of document, with indication, where appropriate, of the relevant passages | Relevant to claim No. |
|---|---|---|
| A | JP 6-287059 A  (Asahi Glass Co., Ltd.),<br>11 October 1994 (11.10.1994),<br>claims; paragraphs [0014], [0016], [0027],<br>[0030]<br>& US 5466643 A<br>claims; column 3, lines 8 to 15, 35 to 45;<br>column 5, lines 13 to 27, 42 to 49<br>& DE 4403161 A1          & FR 2701022 A1 | 1-9 |
| A | JP 2000-302475 A  (Carl-Zeiss-Stiftung),<br>31 October 2000 (31.10.2000),<br>claims; paragraphs [0023], [0030]; examples<br>& US 6329310 B1<br>claims; column 4, lines 16 to 21; column 5,<br>lines 38 to 42; examples<br>& EP 1044932 A1          & KR 10-2001-0014636 A | 1-9 |
| A | JP 61-236631 A  (Ohara Optical Glass Mfg. Co.,<br>Ltd.),<br>21 October 1986 (21.10.1986),<br>claims; page 1, lower left column, line 20 to<br>page 2, upper left column, line 2; examples<br>(Family: none) | 1-9 |
| P,A | WO 2013/005680 A1  (AvanStrate Inc.),<br>10 January 2013 (10.01.2013),<br>claims; paragraphs [0006], [0018], [0030] to<br>[0032]; examples<br>& US 2013/0059718 A1 | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S62113735 A
- JP S62100450 A
- JP H4325435 A
- JP H5232458 A
- US 5326730 A
- JP H1045422 A
- JP 2005132713 A
- JP 2009523697 T
- JP 2011070092 A
- JP 2012040125 A

### Non-patent literature cited in the description

- **TAKAO OHTA ; AKIRA MIYANAGA ; KENJI MORINAGA ; TSUTOMU YANAGASE.** Study on Measuring Method of the Electrical Conductivity of Ionic Solutions and Melts. *Journal of the Japan Institute of Metals and Materials,* 1981, vol. 45 (10), 1036-1043